# FASCICULE DE BREVET EUROPEEN

(11) **EP 2 360 109 B1**
(45) Date de publication et mention de la délivrance du brevet: **24.10.2012**
(21) Numéro de dépôt: 11153839.3
(22) Date de dépôt: 09.02.2011
(51) Int. Cl.: B65G 47/84, B29C 49/42, B65G 47/90

(54) **Dispositif de transfert d'objet avec pince**
Transportvorrichtung für Gegenstände mit Greifer
Transfer device for objects with gripper

(30) Priorité: 15.02.2010 FR 1051048
(43) Date de publication de la demande: 24.08.2011
(73) Titulaire: SIDEL PARTICIPATIONS, 76930 Octeville-sur-Mer (FR)
(72) Inventeur: Michel, Jocelyn, 76930, OCTEVILLE S/MER (FR)
(74) Mandataire: Cabinet Plasseraud

(56) Documents cités:
- DE-A1-102005 041 929

## Description

L'invention concerne le domaine des dispositifs de transfert d'objet à pince permettant de saisir un objet à un endroit et de le relâcher à un autre endroit. Ces dispositifs de transfert peuvent être du type roue de transfert coopérant par exemple avec des carrousels.

L'invention concerne également la pince convenant pour des dispositifs de transfert d'objet.

La demande de brevet FR 2 479 077 décrit une installation industrielle de fabrication de bouteilles équipée d'un dispositif de transfert de préformes entre un four de préchauffage des préformes et une souffleuse de bouteilles.

Le dispositif de transfert décrit comprend une série de bras qui sont équipés de pinces et qui sont entraînés en rotation. L'ouverture et la fermeture des pinces sont commandées par un système de cames mécaniques. Lors de la rotation, un galet relié à une mâchoire mobile de la pince coulisse dans une rainure fixe.

L'un des avantages d'un actionnement de pinces par cames mécaniques est que des cadences très élevées sont possibles avec une grande reproductibilité. Un inconvénient de ce type de pinces et de dispositif de transfert est que la mise au point de la rainure de guidage de la came est complexe et que les cames finissent par s'user, entraînant une dérive du point de fonctionnement du dispositif de transfert.

Un autre inconvénient de ce type d'actionnement par galet coulissant dans une rainure est que le déplacement relatif du galet par rapport au corps de pince oblige la mâchoire de la pince à s'ouvrir ou à se fermer. Autrement dit, la préforme à transférer est saisie de manière positive. En cas d'incident, la préforme saisie est bloquée et ne peut pas facilement s'extraire de la pince à l'état fermé. Cela peut provoquer des dégâts, ou risque d'entraîner l'arrêt de l'ensemble de l'installation industrielle entraînant des coûts de maintenance élevés. Il serait beaucoup moins coûteux que l'objet transféré de manière défaillante soit évacué proprement et que l'installation industrielle continue sa course en ne poursuivant pas le traitement de l'objet évacué.

Par ailleurs, la demande WO2006/089610 décrit une pince pour système de transfert de conteneur. La pince comprend deux mâchoires mobiles en rotation comprenant chacune un aimant permanent à distance de l'axe de rotation de la mâchoire. Les aimants permanents sont disposés de manière à se repousser l'un l'autre et à ramener la pince en position fermée. L'ouverture de la pince est commandée par l'approche de l'objet lui-même. En s'approchant de la pince, l'objet glisse le long d'un plan incliné à l'extrémité de chacune des mâchoires et repousse les mâchoires vers l'extérieur. La pince s'ouvre ainsi pendant que les aimants répulsifs se rapprochent. Autrement dit, les aimants permanents fonctionnent comme un ressort de rappel monté en compression. Un inconvénient de ce type de pince est que l'insertion de l'objet entraîne un frottement sur la mâchoire. Cela peut provoquer une usure et/ou un déréglage de la pince de transfert.

Le document DE 10 2005 041 929 décrit un dispositif de transfert et une pince selon le preambule des revendication 1et 8, la pince étant équipée d'un moyen de rappel des mâchoires utilisant des aimants permanents. Cette pince présente les mêmes inconvénients que la pince citée précédemment.

L'invention propose un dispositif de transfert d'objet et une pince convenant à un dispositif de transfert, qui remédient à au moins l'un des inconvénients précités.

Un but de l'invention est de proposer une pince et un dispositif de transfert dont l'actionnement de la pince soit reproductible, plus facile à mettre au point, réduisant les dérives de fonctionnement et qui n'engendre pas le blocage de la pince en cas d'incident.

Selon un aspect, l'invention porte sur un dispositif de transfert d'objet comprenant un bâti, au moins une pince présentant un corps de pince et un moyen de guidage du corps de pince par rapport au bâti ; la pince étant équipée d'une ou de plusieurs mâchoires mobiles par rapport au corps de pince. La pince comprend un élément magnétique apte, lorsqu'il est soumis à un champ magnétique supérieur à un seuil d'efficacité, à exercer une force sur au moins une mâchoire mobile. Le bâti comprend un organe de commande de la pince apte à créer un champ magnétique supérieur au seuil d'efficacité dans au moins une zone du bâti correspondant à l'actionnement de la pince. Ledit moyen de guidage du corps de la pince est conçu pour que l'élément magnétique de la pince soit entraîné en translation le long d'une trajectoire de déplacement traversant la zone d'actionnement de la pince définie par l'organe de commande.

Grâce au moyen de guidage et à la zone d'actionnement sur le bâti, la force exercée par l'élément magnétique va pouvoir ouvrir ou fermer la pince, et ceci en fonction de la position de la pince et non pas de manière permanente comme le moyen de rappel magnétique décrit dans la demande WO2006/089610. Ainsi, la zone d'actionnement et l'élément magnétique se comportent comme un système de came magnétique permettant un actionnement aussi reproductible que les cames mécaniques, sans toutefois engendrer de blocage de la pince. Le fait d'agir sur la mâchoire par interaction entre un champ magnétique créé sur le bâti et l'élément magnétique de la pince permet un actionnement sans contact, ni entre le bâti et la pince, ni entre la pince et l'objet. Cela réduit les dérives de fonctionnement. De plus, la position de la zone d'actionnement est plus facilement ajustable lors de la mise au point du dispositif de transfert que la position d'une rainure dans un bâti.

Selon l'invention, la pince comprend un moyen de commutation actionnable pour passer d'une première configuration vers une deuxième configuration de la pince, l'une des configurations correspondant à l'ouverture de la pince et l'autre configuration correspondant à un serrage de la pince sur l'objet à transférer, la pince comprenant en outre un moyen de rappel permanent de la deuxième configuration vers la première configuration ; le moyen de commutation comprenant ledit élément magnétique et étant apte à vaincre l'action du moyen de rappel uniquement lorsque l'élément magnétique est soumis à un champ magnétique supérieur au seuil d'efficacité.

Selon un autre mode de réalisation, le dispositif de transfert d'objet est du type roue de transfert. Le moyen de guidage de la pince comprend un support sur lequel est fixé la pince, le support étant mobile en rotation par rapport à un axe principal du bâti.

Avantageusement, la ou les mâchoires de la pince sont montées en extrémité d'un bras, lequel bras est télescopique et/ou articulé autour d'un point d'attache (a) au support situé à distance de l'axe principal du bâti.

Selon une variante, l'élément magnétique présente une surface de détection de champ magnétique s'étendant dans un plan perpendiculaire à l'axe principal du bâti.

Selon une autre variante, l'élément magnétique présente une surface de détection de champ magnétique s'étendant dans un plan parallèle à l'axe principal du bâti et à la trajectoire de déplacement de l'élément magnétique.

Avantageusement, le générateur de champs magnétiques comprend un aimant permanent et/ou un électroaimant.

Selon un autre aspect, l'invention porte également sur une pince pour dispositif de transfert d'objet. La pince s'étend dans un volume délimité globalement par une surface extérieure de la pince, la pince comprenant un corps de pince, au moins une mâchoire mobile par rapport au corps de pince et au moins un premier élément magnétique. Le premier élément magnétique présente une surface de détection de champ magnétique affleurant sensiblement la surface extérieure de la pince de manière à être apte à former une interface magnétique avec un organe magnétique de commande extérieur à la pince.

On entend par surface extérieure de la pince une surface délimitant le volume dans lequel est inscrit la pince, une surface qui enveloppe la pince.

Avantageusement, la surface de détection de l'élément magnétique affleure dans une portion de la surface extérieure susceptible de voir défiler un chemin de transfert d'un bâti, l'organe de commande étant disposé le long du chemin de transfert. Autrement dit, la portion de la surface extérieure où affleure la surface de détection est ouverte sur au moins deux côtés opposés.

La disposition de l'élément magnétique permet une commande de la pince sans contact avec l'organe extérieur à la pince. Il n'y a pas de frottement avec l'objet à transférer ni avec un bâti du dispositif de transfert. De plus, l'interface magnétique avec un organe de commande évite que la pince ne se bloque en cas d'incident.

Selonl'invention, la pince comprend un moyen de commutation actionnable d'une première configuration de la pince vers une deuxième configuration de la pince, l'une des configurations correspondant à l'ouverture de la pince et l'autre configuration correspondant à un serrage de la pince sur l'objet à transférer, la pince comprenant en outre un moyen de rappel permanent apte à déplacer la mâchoire mobile vers la première configuration ; le moyen de commutation actionnable comprenant le premier élément magnétique qui est solidaire du corps de pince et un deuxième élément magnétique qui est solidaire de la mâchoire mobile ; la pince présentant un entrefer entre le premier et le deuxième élément magnétique, l'entrefer étant distant de la surface de détection du premier élément magnétique, l'entrefer étant dimensionné de manière que, lorsque la surface de détection est plongée dans un champs magnétique supérieur à un seuil d'efficacité, une force apte à vaincre le moyen de rappel est appliquée sur la mâchoire mobile.

Avantageusement, la mâchoire mobile est montée à rotation autour d'un axe d'articulation. L'entrefer s'étend à distance de l'axe, dans un plan parallèle à l'axe d'articulation.

Avantageusement, le premier élément magnétique présente deux portions d'extrémités, préférablement reliées par une forme coudée, l'extrémité d'une des portions étant la surface de détection de champ magnétique, l'extrémité de l'autre portion définissant l'entrefer.

Avantageusement, le premier élément magnétique est constitué de fer doux et le deuxième élément magnétique est constitué, soit de fer doux, soit d'un aimant permanent.

Avantageusement, le moyen de rappel permanent comprend au moins un aimant permanent.

Avantageusement, la pince comprend une deuxième mâchoire mobile et un moyen de synchronisation du déplacement des deux mâchoires par rapport au corps de pince.

La présente invention sera mieux comprise à l'étude de la description détaillée de quelques modes de réalisation pris à titre d'exemples nullement limitatifs et illustrés par les dessins annexés sur lesquels :
- La figure 1 est une vue de dessus d'un premier mode de réalisation du dispositif de transfert, et de la pince de l'invention,
- La figure 2 est une coupe partielle selon le plan II-II de la figure 1,
- La figure 3 est une vue de dessus d'un deuxième mode de réalisation du dispositif de transfert et de la pince de l'invention, vus selon le plan III-III de la figure 4, une seule pince étant représentée.
- La figure 4 est une coupe partielle selon le plan IV-IV de la figure 3,
- Les figures 5A et 5B sont des vues de dessus en position respectivement fermée et ouverte d'un mode de réalisation de la pince,
- Les figures 6A et 6B sont des illustrations selon le plan IV-IV de la figure 3 de deux variantes du deuxième mode de réalisation,
- La figure 7 est une illustration d'un troisième mode de réalisation du dispositif de transfert, et
- Les figures 8A à 8B sont des illustrations de deux variantes d'un quatrième mode de réalisation du dispositif de transfert.

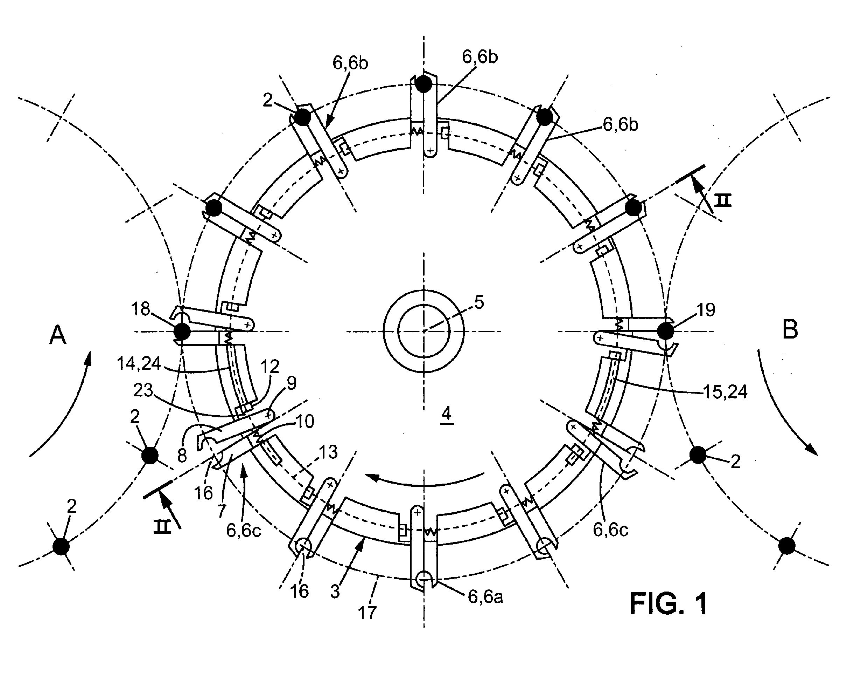

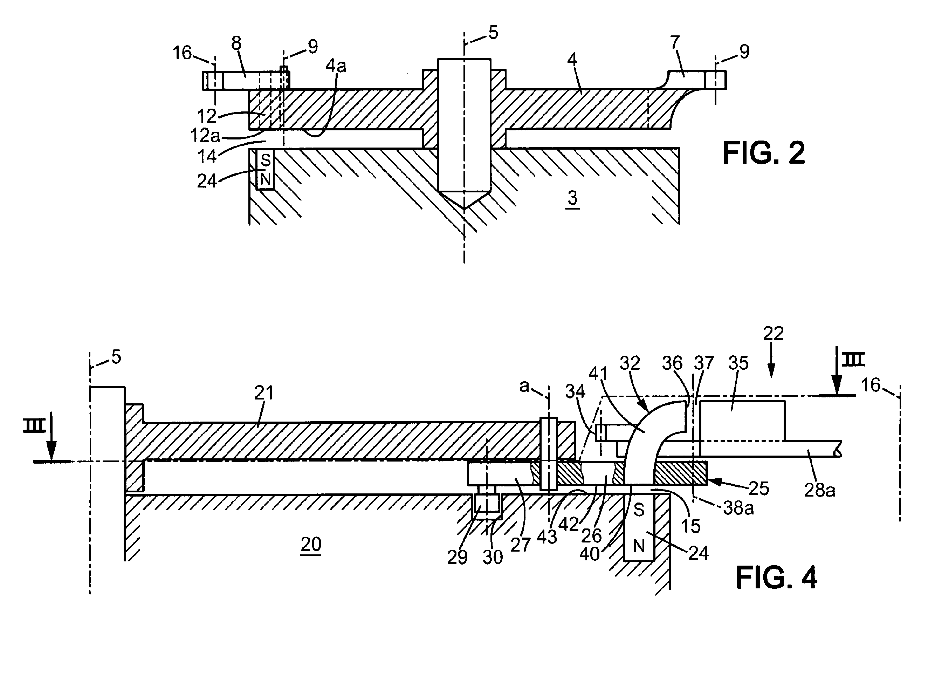

Comme illustré aux figures 1 et 2, le dispositif de transfert permet de transférer un objet 2 depuis un convoyeur amont A vers un convoyeur aval B. Le dispositif de transfert comprend un bâti 3, fixe par rapport aux convoyeurs amont et aval A, B et une roue de transfert 4 mobile en rotation autour d'un axe principal 5 du bâti 3.

La roue de transfert 4 est un support d'une pluralité de pinces 6 présentant chacune une mâchoire fixe 7 et une mâchoire mobile 8 autour d'un axe d'articulation 9.

Chacune des pinces 6 comporte un ressort de rappel 10 tirant en permanence la mâchoire mobile 8 vers la mâchoire fixe 7 de manière que la pince 6 soit au repos dans une configuration correspondant soit à une position fermée 6a de la pince, soit à une position 6b permettant un serrage de la pince sur l'objet 2 en cours de transfert.

Chacune des pinces 6 comprend un élément magnétique 12 en fer doux. Lors de la rotation de la roue de transfert 4, l'élément magnétique 12 de chacune des pinces 6 se déplace le long d'une même trajectoire 13 fixe par rapport au bâti 3.

Le bâti 3 comprend une première zone 14 et une deuxième zone 15 dans lesquelles est généré un champ magnétique d'une intensité supérieure à un seuil d'efficacité. Lorsqu'une extrémité inférieure 12a de l'élément magnétique 12 (visible en figure 2) pénètre dans la première zone 14 ou la deuxième zone 15, le champ magnétique est alors conduit par l'élément magnétique 12 jusqu'à un entrefer 23 (visible en figure 1) situé entre l'élément magnétique 12 et la mâchoire mobile 8 qui est également en fer doux. Ainsi, les zones 14 et 15 sont des zones dédiées à l'actionnement de la pince 6, car en entrant dans lesdites zones, l'élément magnétique 12 attire à lui la mâchoire mobile 8. Le seuil d'efficacité du champ magnétique créé dans les zones 14, 15 est tel que l'attirance créée entre l'élément magnétique 12 et le matériau magnétique de la mâchoire mobile 8 est supérieure à l'effort exercé par le ressort de rappel 10. Ainsi, lorsqu'une pince 6 voit son élément magnétique pénétrer dans l'une des zones 14 ou 15, la mâchoire mobile 8 s'ouvre. La pince correspondante est alors dans une position 6c d'ouverture permettant soit l'introduction, soit l'évacuation de l'objet 2 à transférer.

Chacune des pinces 6 présente un axe de préhension 16 correspondant au logement destiné à recevoir l'objet 2 à transférer. L'axe 16 de préhension peut présenter n'importe quelle orientation par rapport à l'axe principal 5 du bâti. Toutefois, une application particulièrement avantageuse du dispositif de transfert permet de transférer des préformes pour la fabrication de récipients depuis un convoyeur amont A issu d'un four de préchauffage vers un convoyeur aval B d'une machine d'étirage/soufflage. Dans une telle utilisation du dispositif de transfert, l'axe 16 de préhension de chacune des pinces 6 est avantageusement parallèle à l'axe principal 5 du bâti.

Les axes 16 de préhension de chacune des pinces 6 parcourent un cylindre 17 au cours de la rotation de la roue de transfert 4. Les objets 2 à transférer, entraînés par le convoyeur amont A, arrivent dans une position 18 de prise en charge de l'objet 2 tangente avec le cylindre 17 de transfert. L'axe de l'objet 2 récupéré par le convoyeur aval B est tangent avec le cylindre 17 dans une position 19 de déchargement de l'objet 2.

La première zone 14 du bâti 3 est située le long de la trajectoire 13 de l'élément magnétique 12 en amont de la position de prise en charge 18. La deuxième zone 15 s'étend également le long de la trajectoire 13 et est située en aval de la position 19 de déchargement. Ainsi, les pinces 6 arrivant dans la première zone 14 s'ouvrent pour permettre à l'objet 2 convoyé par le convoyeur A de pénétrer dans la pince 6 correspondante. Dès que la pince atteint la position 18 de prise en charge, son élément magnétique 12 quitte la première zone 14 et la mâchoire mobile 8 de ladite pince 6 n'est plus soumise qu'à l'effort exercé par le ressort de rappel 10 de sorte que la pince 6 se referme sur l'objet 2 venant d'être pris en charge.

L'objet 2 pris en charge voit son axe être translaté le long du cylindre 17 jusqu'à la position 19 de déchargement dans laquelle la pince 6 correspondante voit son élément magnétique 12 entrer dans la deuxième zone de champ magnétique 15. La mâchoire mobile 8 est alors attirée par l'élément magnétique 12 soumis à un champ magnétique supérieur au seuil d'efficacité, de sorte que la mâchoire mobile 8 s'ouvre et rend possible le déchargement de l'objet convoyé qui peut alors être pris en charge par le convoyeur aval B.

Comme illustré en figure 2, l'extrémité 12a de l'élément magnétique 12 affleure la surface extérieure 4a de la portion de la roue 4 servant de corps de pince. Dans une variante, l'extrémité 12a de l'élément magnétique 12 peut faire saillie de la surface 4a. Dans tous les cas, la surface 12a affleure à l'extérieur de la pince pour constituer une surface 12a de détection du champ magnétique existant à l'extérieur de la pince 6. La surface 12a pourrait être légèrement en retrait de la surface 4a inférieure de la pince 6, à condition toutefois que le renfoncement constitué par la surface 12a introduise une atténuation du champ magnétique non pénalisante pour transmettre un champ magnétique avec une intensité suffisante jusqu'à l'entrefer 23.

Le bâti 3 comprend un organe de commande 24 constitué par une succession d'aimants permanents encastrés le long des zones 14 et 15 dont les polarités seront décrites aux figures 4, 6 et 8. De manière alternative, l'organe de commande 24 peut être constitué par un insert en fer doux s'étendant le long des zones 14 et 15, lequel insert est relié magnétiquement à un unique générateur de champ magnétique. Une liaison magnétique sous-marine relie les deux zones 14 et 15 de manière que le champ magnétique vu par les éléments magnétiques 12 des pinces circulant le long de la trajectoire 13 soit inférieur au seuil d'efficacité tant que ledit élément magnétique 12 ne pénètre pas dans les zones d'actionnement des pinces 14 ou 15.

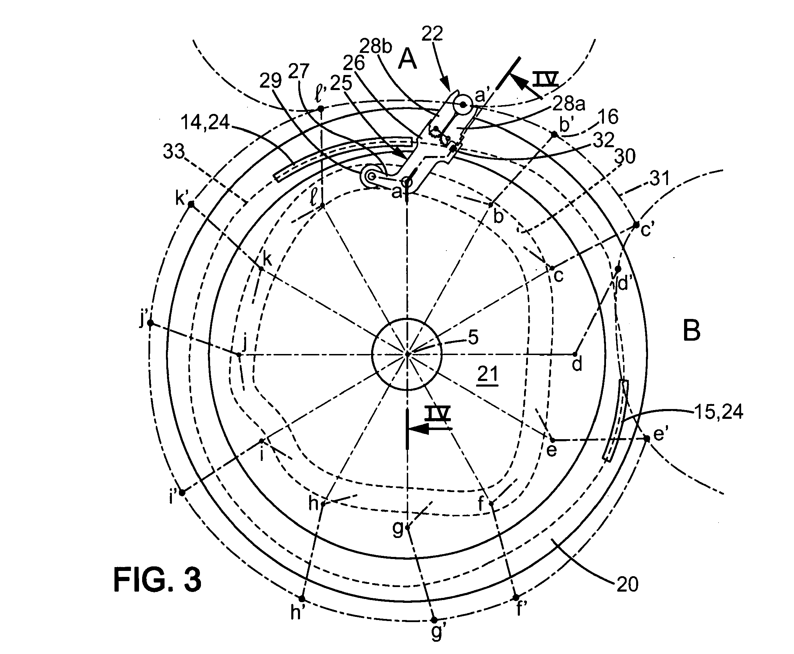

Le deuxième mode de réalisation illustré aux figures 3 et 4 comprend un bâti 20 et un support 21 équipé d'une pluralité de pinces 22 qui sont fixées au support 21 en une pluralité de points d'attache illustrés par les lettres « a » à « 1 ». Le support 21 présente la forme d'une roue montée à rotation autour de l'axe principal 5 du bâti 20. Chacun de ces points d'attache (a...l) sont équidistants de l'axe principal 5 du bâti 20.

Chacune des pinces 22 est constituée d'un corps de pince 25 sur le support 21 comprenant un bras 26 et un levier 27 s'étendant radialement à partir du point d'attache « a » du corps de pince 25. Une paire de mâchoires mobiles 28a, 28b est disposée en extrémité du bras 26 opposé au point d'attache « a ». Un galet 29 est monté à rotation en extrémité du levier 27 opposé au point d'attache « a ». Le bâti 20 présente une rainure 30 ayant sensiblement la largeur du galet 29 et servant de came de pilotage de l'orientation des pinces 22 par rapport au support 21. La rainure 30 s'étend le long d'une boucle fermée non circulaire.

Seule une pince 22 a été illustrée en détail sur la figure 3. Pour les autres pinces montées sur le support 21, seuls ont été représentés les axes du bras 26 et du levier 27 qui forment entre eux un angle de levier constant. Pour chacune des pinces, la position de l'axe des mâchoires mobiles 28 destinées à recevoir l'objet 2 à transférer est représentée par les lettres « a' », « b' », ... « l' » correspondant aux mêmes lettres des points d'attache « a », « b », ..... « l ». Ainsi, les axes des objets transportés se déplacent le long d'une surface tubulaire 31 à section droite non circulaire. Cela permet que la zone de coïncidence entre la trajectoire des objets convoyés par les convoyeurs amont A ou aval B ne soit pas limitée à une position unique de chargement ou de déchargement.

Chacune des pinces 22 présente un premier élément magnétique 32 monté sur le corps de pince 25. Le premier élément magnétique 32 parcourt une trajectoire 33 en forme de boucle non circulaire au cours de la rotation du support 21. La forme de la trajectoire 33 est directement définie par les dimensions du levier 27 et par la forme de la rainure 30.

Le bâti 20 présente également un organe de commande 24 constitué de la même manière que pour le bâti 3 du premier mode de réalisation. L'organe de commande 24 présente également une première zone 14 et une deuxième zone 15 dédiées à l'actionnement des pinces 22.

Comme illustré en figure 4, le premier élément magnétique 32 présente une extrémité extérieure 40 reliée à une extrémité interne 36 par une forme coudée 41. La mâchoire mobile 28a comprend un deuxième élément magnétique 35 séparé de l'extrémité interne 36 du premier élément magnétique 32 par un entrefer 37.

Le corps de pince 25 est délimité par une surface extérieure qui comprend notamment une surface inférieure 42 de la pince qui est en regard d'une surface supérieure 43 du bâti 20. La surface inférieure 42 se déplace horizontalement de manière parallèle à la surface supérieure 43 du bâti 20 au cours de la rotation du support 21. Autrement dit, la surface inférieure 42 voit défiler la surface supérieure 43 du bâti. La surface 42 du corps de pince 25 constitue une face extérieure de référence pour la pince 22.

L'extrémité extérieure 40 du premier élément magnétique 32 affleure sensiblement la face extérieure de référence 42 du corps de pince 25. Le corps de pince 25 est en matériau amagnétique tel que de l'inox, de l'aluminium ou un matériau synthétique. L'extrémité extérieure 40 du premier élément magnétique 32 en fer doux constitue une surface de détection du champ magnétique généré par l'organe 24 de commande. Autrement dit, la surface 40 constitue une interface magnétique de la pince 22 vis-à-vis de l'organe 24 de commande. Lorsque la pince 22 est au-dessus de la zone d'actionnement 14 ou 15, l'existence du premier élément magnétique 32 guidant le champ magnétique jusqu'à l'entrefer 37 engendre une intensité de champ magnétique sur le deuxième élément magnétique 35, bien supérieure au champ magnétique qui aurait atteint ce deuxième élément magnétique 35 sans la présence du premier élément magnétique 32. Autrement.dit, l'existence du premier élément magnétique 32, s'étendant depuis une surface de extérieure de la pince 22 jusqu'à un mécanisme intérieur de commutation de la mâchoire mobile 28a, permet d'amener le champ magnétique détecté à l'extérieur de la pince 22 jusqu'audit mécanisme intérieur de commutation avec une intensité supérieur au seuil d'efficacité.

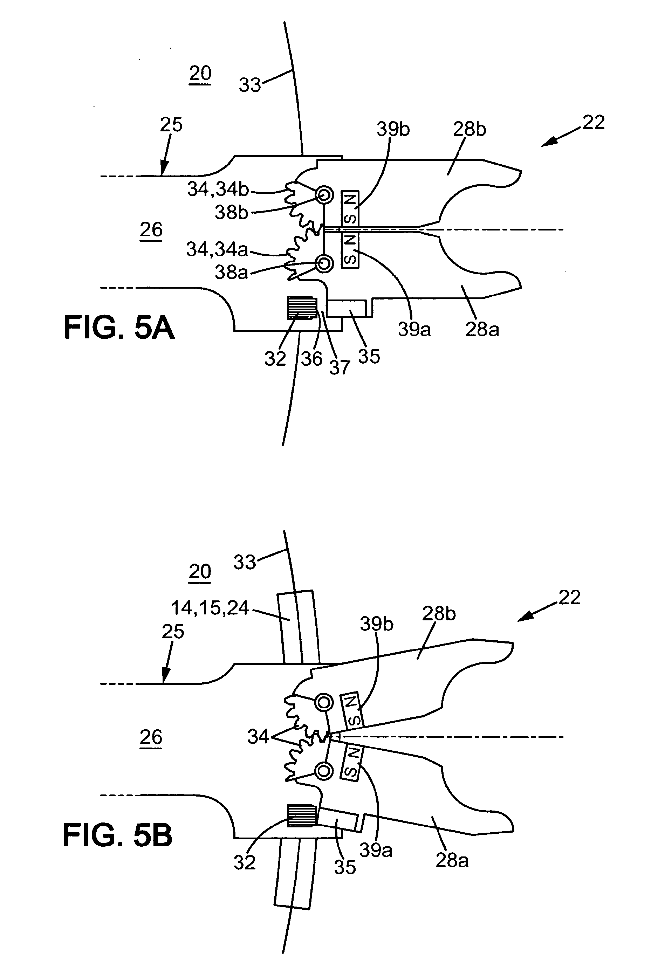

Comme illustré aux figures 5A et 5B, chacune des mâchoires mobiles 28a, 28b est montée à rotation sur le bras 26 du corps de pince 25 autour d'un axe de rotation 38a respectivement 38b. Chacune des mâchoires mobiles 28a, 28b présente également une denture d'engrenage 34a, 34b engrenant l'une avec l'autre et constituant un moyen de synchronisation 34 des deux mâchoires 28a, 28b par rapport au corps de pince 25. Chacune des mâchoires 28a, 28b comprend également un aimant de rappel 39a, 39b situé en regard l'un de l'autre à distance du plan comprenant les axes de rotation 38a, 38b. Les aimants de rappel 39a, 39b sont orientés magnétiquement de manière à s'attirer l'un l'autre.

En configuration d'ouverture illustrée en figure 5B, le premier élément magnétique 32 se trouve dans une zone d'actionnement 14 ou 15 définie sur le bâti 20 et le champ magnétique conduit par le premier élément magnétique 32 jusque dans l'entrefer 37 provoque le pivotement de la mâchoire mobile 28a autour de son axe de rotation 38a. La traction engendrée entre les premier et deuxième éléments magnétiques 32, 35 provoque un couple supérieur à celui des aimants de rappel 39a, 39b.

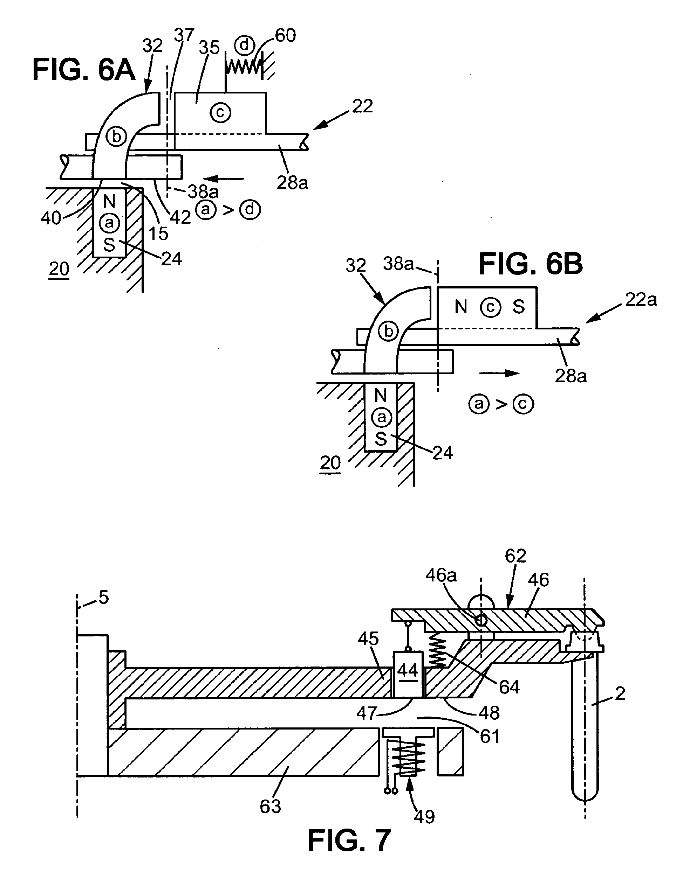

On va maintenant, à l'aide des figures 6A et 6B, décrire deux variantes du deuxième mode de réalisation.

Dans la figure 6A, l'organe de commande 24 est un aimant permanent encastré dans le bâti 20 représenté par la lettre (a). Le premier élément magnétique, représenté par la lettre (b) est en fer doux. Le deuxième élément magnétique 35 représenté par la lettre (c) est également en fer doux. La mâchoire mobile est reliée à un ressort de rappel 60 fixé au corps de pince 25, fonctionnant en traction et représenté par la lettre (d). Le premier élément magnétique (b) permet de relier magnétiquement la zone 15 présentant un champ magnétique supérieur au seuil d'efficacité à l'entrefer 37. L'actionnement de l'organe de commande engendre le déplacement de la pince mobile 28a dans le sens de la flèche à condition que l'effort engendré par l'organe de commande (a) soit supérieur à l'effort de rappel engendré par le ressort de rappel (d). Cette condition d'actionnement est illustrée par (a) > (d) sur la figure 6A.

Dans la variante illustrée en figure 6B, le moyen de rappel est réalisé directement par le premier élément magnétique (b) et le deuxième élément magnétique représenté par la lettre (c). En effet, le deuxième élément magnétique (c) est un aimant permanent 35b qui attire en permanence le premier élément magnétique (b) en fer doux. Lorsque la pince passe devant l'aimant permanent (a) de l'organe de commande, le deuxième élément magnétique (c) est repoussé dans le sens de la flèche à condition que l'intensité magnétique engendrée par l'organe de commande (a) soit supérieure à l'intensité magnétique engendrée par le deuxième élément magnétique(c). Cette condition d'actionnement est illustrée par « (a) > (c) » sur la figure 6B.

Le mode de réalisation illustré en figure 7 comprend une pince 62 équipée d'un unique élément magnétique 44 en fer doux mobile par rapport à un corps de pince 45 et solidaire d'une mâchoire 46 qui est mobile par rapport à un axe 46a situé dans un plan perpendiculaire à l'axe 5 principal du bâti 63. La mâchoire mobile 46 est ramenée en position fermée par un ressort de rappel 64. L'extrémité 47 de l'élément magnétique 45 constitue une surface de détection du champ magnétique qui affleure sensiblement une surface externe de référence 48 du corps de pince 45 qui s'étend parallèlement à la trajectoire de transfert de l'objet 2.

Le dispositif de transfert comprend un organe de commande 49 situé dans le bâti 63 et est constitué par un générateur électromagnétique apte à générer un champ magnétique dans la zone 61 d'actionnement de la pince par où passe l'élément magnétique 44 de la pince lors du transfert d'objet.

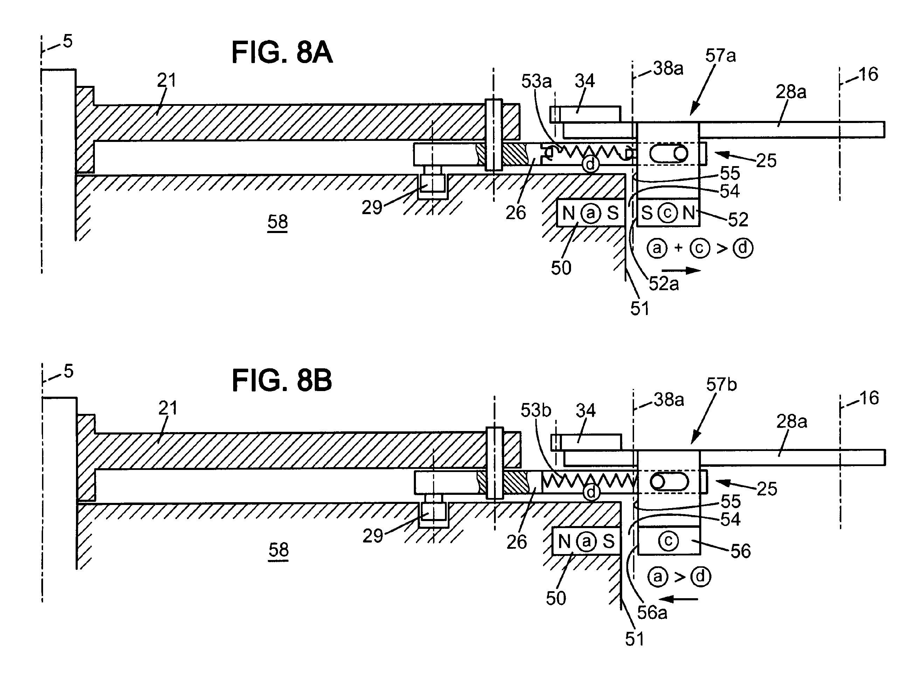

Le quatrième mode de réalisation illustré aux figures 8A et 8B diffère du deuxième mode de réalisation uniquement par le fait qu'il comprend un organe 50 de commande engendrant un champ magnétique non pas sur un plan horizontal mais sur un champ vertical 51 d'un bâti 58.

Une pince 57a, 57b comprend la mâchoire mobile 28a présentant une excroissance s'étendant le long du champ vertical 51 et présente un élément magnétique 52, 56 unique susceptible d'entrer dans une zone 54 d'actionnement située en regard de l'aimant permanent 50 de commande de la pince 57a, 57b.

Dans la variante illustrée en figure 8A, La mâchoire mobile 28a de la pince 57a est reliée au corps de pince 57a, 57b par un ressort de 53 rappel en traction. L'élément magnétique 52 est un aimant permanent disposé de manière répulsive par rapport à l'aimant permanent 50 de commande. L'actionnement de la pince 57a a lieu à condition que la somme des intensités magnétiques (a) et (c) engendrées par les deux aimants permanents 50, 52 soit supérieure à l'effort (d) de rappel en traction engendré par le ressort de rappel en traction 53. Autrement dit, la pince 57a est actionnée si (a) + (c) > (d).

Dans la variante illustrée en figure 8B, le moyen de rappel de la pince 57b est un ressort en compression 55 et l'élément magnétique 56 unique de la pince 57b est en fer doux. Lorsque la pince 57b arrive dans la zone 54 d'actionnement, la force (a) d'attraction magnétique engendrée par l'aimant permanent 50 de commande sur l'élément magnétique 56 est supérieure à la force (d) de compression du ressort (55).

D'une manière générale, le fait que les pinces 6, 22, 22a, 57b, 62 destinées à saisir l'objet 2 à transférer soient équipées d'un élément magnétique présentant une surface de détection affleurant une surface de référence de la pince permet à un bâti 3, 20, 58 fixe de générer un champ magnétique le long d'une trajectoire de transfert d'objet de manière à commander directement la pince en la faisant passer d'une configuration ouverte à une configuration fermée ou inversement. Avantageusement, la trajectoire de transfert d'objet est sensiblement parallèle à la surface de détection de la pince.

## Revendications

1. Dispositif de transfert d'objet comprenant un bâti (3,20,63,58), au moins une pince (6,22,22a,62,57a,57b) présentant un corps de pince (7,25,45) et un moyen de guidage du corps de pince par rapport au bâti ; la pince étant équipée d'une ou de plusieurs mâchoires (8,28a,28b,46) mobiles par rapport au corps de pince (7,25,45), la pince comprenant un moyen de rappel (10,39a-39b,32-35a,60,64,53a,53b) permanent d'une deuxième configuration de la pince vers une première configuration de la pince ; l'une desdites première ou deuxième configurations de la pince correspondant à l'ouverture de la pince et l'autre desdites première ou deuxième configurations de la pince correspondant à un serrage de la pince sur l'objet à transférer,
**caractérisé en ce que** la pince (6,22,22a,62,57,57a) comprend un moyen de commutation (8-12,32-35,32-35a,44,50-52,50-56) actionnable pour passer de la première configuration vers la deuxième configuration de la pince, le moyen de commutation comprenant un élément magnétique (12,32,44,52,55) ; le moyen de commutation étant apte à vaincre l'action du moyen de rappel uniquement lorsque l'élément magnétique (12,32,44,52,56) est soumis à un champ magnétique supérieur à un seuil d'efficacité,
et **en ce que** le bâti comprend un organe de commande (24,49,50) de la pince apte à créer un champ magnétique supérieur au seuil d'efficacité dans au moins une zone (14,15) du bâti dédiée à l'actionnement de la pince; ledit moyen de guidage du corps de pince étant conçu pour que l'élément magnétique de la pince soit entraîné le long d'une trajectoire de déplacement (13,33) traversant la zone (14,15) d'actionnement de la pince définie par l'organe de commande (24,49,50).

2. Dispositif selon la revendication 1, dans lequel ledit moyen de guidage du corps de pince est conçu pour que la trajectoire de déplacement (13,33) de l'élément magnétique quitte ladite au moins une zone d'actionnement de manière que le champ magnétique vu par l'élément magnétique devienne inférieur audit seuil d'efficacité.

3. Dispositif selon la revendication 1 ou 2, du type roue de transfert, dans lequel le moyen de guidage de la pince comprend un support (4,21) sur lequel est fixé la pince, le support étant mobile en rotation par rapport à un axe (5) principal du bâti (3,20,63,58).

4. Dispositif selon la revendication 3, dans lequel la ou les mâchoires (28a,28b) de la pince (22,22a) sont montées en extrémité d'un bras (26), lequel bras est télescopique et/ou articulé autour d'un point d'attache (a) au support (21) situé à distance de l'axe (5) principal du bâti (20).

5. Dispositif selon la revendication 3 ou 4, dans lequel l'élément magnétique (12,32,44) présente une surface de détection (12a,40,47) de champ magnétique s'étendant dans un plan (4a,42,48) perpendiculaire à l'axe (5) principal du bâti.

6. Dispositif selon la revendication 3 ou 4, dans lequel l'élément magnétique (52,56) présente une surface (52a,56a) de détection de champ magnétique s'étendant dans un plan (55) parallèle à l'axe (5) principal du bâti (58) et à la trajectoire de déplacement de l'élément magnétique (52,56).

7. Dispositif selon l'une des revendications 1 à 6, dans lequel l'organe de commande comprend un aimant permanent (24,50) et/ou un électroaimant (49).

8. Pince (6,22,22a,62,57a,57b) pour dispositif de transfert d'objet (2), comprenant un corps de pince (7,25) et une mâchoire mobile (8,28a ) par rapport au corps (7,25) la pince comprenant un moyen de rappel (10,39a-39b,60) permanent apte à déplacer la mâchoire mobile (8,28a) depuis une deuxième configuration vers une première configuration de la pince, l'une desdites configurations correspondant à l'ouverture de la pince et l'autre desdites configurations correspondant à un serrage de la pince sur l'objet à transférer, **caractérisé en ce que** la pince comprend en outre un moyen de commutation (8-12,32-35,32-35a) actionnable pour passer de la première configuration de la pince vers la deuxième configuration de la pince, le moyen de commutation actionnable comprenant un premier élément magnétique (12,32) qui est solidaire du corps (7,25) de pince et un deuxième élément magnétique (8,35,35a) qui est solidaire de la mâchoire mobile (8,28a) par rapport au corps de pince ; la pince présentant un entrefer (23,37) entre le premier et le deuxième élément magnétique, ledit entrefer étant distant d'une surface (12a,40) de détection du premier élément magnétique, l'entrefer étant dimensionné de manière que, lorsque la surface de détection est plongée dans un champ magnétique supérieur à un seuil d'efficacité, une force apte à vaincre le moyen de rappel est appliquée sur la mâchoire mobile (8,28a).

9. Pince selon la revendication 8, dans laquelle le premier élément magnétique (12, 32) présente deux portions d'extrémité (12a, 40,36), l'extrémité d'une des portions étant la surface de détection (12a, 40) de champ magnétique, l'extrémité (36) de l'autre portion définissant l'entrefer (23, 37).

10. Pince selon la revendication 9, dans laquelle les deux portions d'extrémité (40,36) sont reliées par une forme coudée (41).

11. Pince selon l'une des revendications 8 à 10, s'étendant dans un volume délimité globalement par une surface extérieure de la pince, la surface (12a,40) de détection du premier élément magnétique (12,32) affleurant sensiblement la surface (4a,42) extérieure de la pince de manière à être apte à former une interface magnétique (14,15) avec un organe magnétique (24) de commande extérieur à la pince.

12. Pince selon l'une des revendications 8 à 11, dans laquelle la mâchoire mobile (8,28a) est montée en rotation autour d'un axe (9,38a) de la mâchoire (8,28a) ; l'entrefer (23,37) s'étendant à distance de l'axe (9,38a), dans un plan parallèle à l'axe (9,38a) d'articulation.

13. Pince selon l'une des revendications 8 à 12, dans laquelle le premier élément magnétique (32) est constitué de fer doux et le deuxième élément magnétique est constitué, soit de fer doux (35), soit d'un aimant permanent (35a) .

14. Pince selon l'une des revendications 8 à 13, dans laquelle le moyen de rappel permanent comprend au moins un aimant permanent (39a,39b).

15. Pince selon l'une des revendications 8 à 14, comprenant une deuxième mâchoire (28b) mobile et un moyen de synchronisation (34) du déplacement des deux mâchoires par rapport au corps de pince (25).

## Claims

1. Object transfer device comprising a frame (3,20,63,58), at least one gripper (6,22,22a,62,57a,57b) having a gripper body (7,25,45) and means of guiding the gripper body with respect to the frame; the gripper being equipped with one or more jaws (8,28a,28b,46) that are mobile with respect to the gripper body (7,25,45), the gripper comprising permanent return means (10,39a-39b,32-35a,60,64,53a,53b) from a second configuration of the gripper to a first configuration of the gripper; one of said first or second configurations of the gripper corresponding to the opening of the gripper and the other of said first or second configurations of the gripper corresponding to a clamping of the gripper onto the object to be transferred,
**characterized in that** the gripper (6,22,22a,62,57,57a) comprises switching means (8-12,32-35,32-35a,44,50-52,50-56) that can be operated in order to pass from the first configuration to the second configuration of the gripper, the switching means comprising a magnetic element (12,32,44,52,56); the switching means being capable of overcoming the action of the return means only when the magnetic element (12,32,44,52,56) is subjected to a magnetic field greater than an efficiency threshold,
and **in that** the frame comprises a control device (24,49,50) of the gripper capable of creating a magnetic field greater than the efficiency threshold in at least one zone (14,15) of the frame dedicated to the operation of the gripper; said means of guiding the gripper body being designed so that the magnetic element of the gripper is driven along a movement path (13,33) passing through the operation zone (14,15) of the gripper defined by the control device (24,49,50).

2. Device according to claim 1, in which said means of guiding the gripper body are designed so that the movement path (13,33) of the magnetic element leaves said at least one operation zone so that the magnetic field experienced by the magnetic element becomes smaller than said efficiency threshold.

3. Device according to claim 1 or 2, of the transfer wheel type, in which the means of guiding the gripper body comprise a support (4,21) on which the gripper is attached, the support being mobile in rotation with respect to a main axis (5) of the frame (3,20,63,58).

4. Device according to claim 3, in which the jaw or jaws (28a,28b) of the gripper (22,22a) are mounted at the end of an arm (26), said arm being telescopic and/or hinged around a point (a) of attachment to the support (21) situated at a distance from the main axis (5) of the frame (20).

5. Device according to claim 3 or 4, in which the magnetic element (12,32,44) has a magnetic field detection surface (12a,40,47) extending in a plane (4a,42,48) perpendicular to the main axis (5) of the frame.

6. Device according to claim 3 or 4, in which the magnetic element (52,56) has a magnetic field detection surface (52a,56a) extending in a plane (55) parallel to the main axis (5) of the frame (58) and to the movement path of the magnetic element (52,56).

7. Device according to one of claims 1 to 6, in which the control device comprises a permanent magnet (24,50) and/or an electromagnet (49).

8. Gripper (6,22,22a,62,57a,57b) for an object transfer device (2), comprising a gripper body (7, 25) and a jaw (8, 28a) that is mobile with respect to the gripper body (7, 25), the gripper comprising permanent return means (10,39a-39b,60) capable of moving the mobile jaw (8, 28a) from a second configuration to a first configuration of the gripper, one of said configurations corresponding to the opening of the gripper and the other of said configurations corresponding to a clamping of the gripper onto the objet to be transferred, **characterized in that** the gripper comprises moreover switching means (8-12,32-35,32-35a) that can be operated in order to pass from the first configuration of the gripper to the second configuration of the gripper, the operable switching means comprising a first magnetic element (12,32) that is interdependent with the gripper body (7,25) and a second magnetic element (8,35,35a) that is interdependent with the jaw (8,28a) mobile with respect to the gripper body; the gripper having an air gap (23,37) between the first and the second magnetic element, said air gap being at a distance from a detection surface (12a,40) of the first magnetic element, the air gap being dimensioned so that, when the detection surface is immersed in a magnetic field greater than an efficiency threshold, a force capable of overcoming the return means is applied to the mobile jaw (8, 28a).

9. Gripper according to claim 8, in which the first magnetic element (12, 32) has two end portions (12a, 40,36), the end of one of the portions being the magnetic field detection surface (40), the end (36) of the other portion defining the air gap (37).

10. Gripper according to claim 9, in which the two end portions (40, 36) are connected by an elbow shape (41).

11. Gripper according to claim 8 or 9, extending in a volume delimited globally by an outer surface of the gripper, the detection surface (12a,40) of the first magnetic element (12,32) substantially exposed through the outer surface (4a,42) of the gripper so as to be capable of forming a magnetic interface (14,15) with a magnetic control device (24) external to the gripper.

12. Gripper according to one of claims 8 to 11, in which the mobile jaw (8,28a) is mounted in rotation around an axis (9,38a) of the mobile jaw (8,28a); the air gap (23,37) extending at a distance from the axis (9,38a), in a plane parallel to the hinge axis (9,38a).

13. Gripper according to one of claims 8 to 12, in which the first magnetic element (32) is constituted by soft iron and the second magnetic element is constituted either by soft iron (35), or by a permanent magnet (35a).

14. Gripper according to one of claims 8 to 13, in which the permanent return means comprise at least one permanent magnet (39a,39b).

15. Gripper according to one of claims 8 to 14, comprising a second mobile jaw (28b) and means (34) of synchronizing the movement of the two jaws with respect to the gripper body (25).

## Patentansprüche

1. Transportvorrichtung für einen Gegenstand mit einem Gestell (3, 20, 63, 58), mindestens einem Greifer (6, 22, 22a, 62, 57a, 57b), der einen Greifkörper (7, 25, 45) und für den Greifkörper ein Führungsmittel im Verhältnis zum Gestell aufweist, wobei der Greifer mit einer oder einer Vielzahl von Klemmbacken (8, 28a, 28b, 46) versehen ist, die im Verhältnis zum Greifkörper (7, 25, 45) beweglich ist, und der Greifer ein beständiges Rückholmittel (10, 39a-39b, 32-35a, 60, 64, 53a, 53b) von einer zweiten Anordnung des Greifers zu einer ersten Anordnung des Greifers aufweist, und eine der ersten oder zweiten Anordnung des Greifers einem Öffnen des Greifers entspricht und die andere der ersten oder zweiten Anordnung des Greifers einem Greifen des Greifers des zu transportierenden Gegenstands entspricht,
**dadurch gekennzeichnet, dass** der Greifer (6, 22, 22a, 62, 57, 57a) ein Schaltmittel (8-12, 32-35, 32-35a, 44, 50-52, 50-56) aufweist, das betätigbar ist, um die erste Anordnung des Greifers zu der zweiten Anordnung zu überführen, wobei das Schaltmittel ein magnetisches Element (12, 32, 44, 52, 56) aufweist und das Schaltmittel angepasst ist, die Wirkung des Rückholmittels nur zu überwinden, wenn das magnetische Element (12, 32, 44, 52, 56) einem Magnetfeld über einer Wirksamkeitsschwelle unterworfen ist,
und dadurch das das Gestell ein Steuerelement (24, 49, 50) für den Greifer aufweist, das eingerichtet ist, ein Magnetfeld über der Wirksamkeitsschwelle zu erzeugen, und zwar in mindestens einem für die Betätigung des Greifers vorgesehenen Bereich (14, 15) des Gestells; wobei das Führungsmittel für den Greifkörper so vorgesehen ist, dass das magnetische Element des Greifers entlang einer Versetzungstrajektorie (13, 33) mitgenommen wird, die den durch das Steuerelement (24, 49, 50) definierten Wirkbereich (14, 15) des Greifers durchfährt.

2. Vorrichtung nach Anspruch 1, bei der das Führungsmittel für den Greifkörper vorgesehen ist, damit die Versetzungstrajektorie (13, 33) des magnetischen Elements den mindestens einen Wirkbereich so verlässt, dass das auf das magnetische Element wirkende Magnetfeld kleiner als die Wirksamkeitsschwelle wird.

3. Vorrichtung nach Anspruch 1 oder 2 des Typs Transportrad, bei dem das Führungsmittel des Greifers eine Unterstützung (4, 21) aufweist, auf der der Greifer befestigt ist, wobei die Unterstützung im Verhältnis zu einer Hauptachse (5) des Gestells (3, 20, 63, 58) beweglich ist.

4. Vorrichtung nach Anspruch 3, bei der die mindestens eine Klemmbacke (28a, 28b) des Greifers (22, 22a) am Ende eines Arms (26) montiert sind, wobei der Arm ausziehbar und/oder schwenkbar um einen Befestigungspunkt (A) an der Unterstützung (21) ist, der beabstandet zur Hauptachse (5) des Gestells (20) angeordnet ist.

5. Vorrichtung nach Anspruch 3 oder 4, bei der das magnetische Element (12, 32, 44) eine Aufnahmefläche (12a, 40, 47) für das Magnetfeld aufweist, die sich in einer Ebene (4a, 42, 48) erstreckt, die senkrecht zur Hauptachse (5) des Gestells ist.

6. Vorrichtung nach Anspruch 3 oder 4, bei der das magnetische Element (52, 56) eine Aufnahmefläche (52a, 56a) für das Magnetfeld aufweist, die sich in einer Ebene (55) erstreckt, die parallel zur Hauptachse (5) des Gestells (58) und zur Versetzungstrajektorie des magnetischen Elements (52, 56) ist.

7. Vorrichtung nach einem der Ansprüche 1 bis 6, bei der das Steuerelement einen Permanentmagneten (24, 50) und/oder einen Elektromagneten (49) aufweist.

8. Greifer (6, 22, 22a, 62, 57a, 57b) für die Transportvorrichtung für Gegenstände (2), die einen Greifkörper (7, 25) und eine im Verhältnis zum Greifkörper (7, 25) bewegliche Klemmbacke (8, 28a) aufweist, mit einem beständigen Rückholmittel (10, 39a-39b, 60), das eingerichtet ist, die bewegliche Klemmbacke (8, 28a) von einer zweiten Anordnung zu einer ersten Anordnung des Greifers zu versetzen, wobei eine der Anordnungen einem Öffnen des Greifers entspricht und die andere der Anordnungen einem Greifen des Greifers des zu transportierenden Gegenstands entspricht, **dadurch gekennzeichnet, dass** der Greifer unter anderem ein Umschaltungsmittel (8-12, 32-35, 32-35a) aufweist, das zum Überführen der ersten Anordnung des Greifers zu der zweiten Anordnung des Greifers betätigbar ist, wobei das betätigbare Schaltmittel ein erstes magnetisches Element (12, 32), das mit dem Greifkörper (7, 25) verbunden ist, und ein zweites magnetisches Element (8, 35, 35a) aufweist, das mit der im Verhältnis zum Greifkörper beweglichen Klemmbacke (8, 28a) verbunden ist; wobei der Greifer einen Luftspalt (23, 37) zwischen dem ersten und dem zweiten magnetischen Element aufweist, der Luftspalt von einer Aufnahmefläche (12a, 40) des ersten magnetischen Elements beabstandet ist und der Luftspalt so dimensioniert ist, dass wenn die Aufnahmefläche in ein über der Wirksamkeitsschwelle liegendes Magnetfeld eingetaucht wird, eine zum Überwinden des Rückholelements eingerichtete Kraft auf die bewegliche Klemmbacke (8, 28a) ausgeübt wird.

9. Greifer nach Anspruch 8, bei dem das erste magnetische Element (12, 32) zwei Endabschnitte (12a, 40, 36) aufweist, wobei das Ende des einen Abschnitts die Aufnahmefläche (12a, 40) für das Magnetfeld ist und das Ende (36) des anderen Abschnitts den Luftspalt (23, 37) definiert.

10. Greifer nach Anspruch 9, bei dem die zwei Endabschnitte (40, 36) über eine abgewinkelte Form (41) verbunden sind.

11. Greifer nach einem der Ansprüche 8 bis 10, der sich in einem Volumen erstreckt, das insgesamt über eine Außenfläche des Greifers begrenzt ist, wobei die Aufnahmefläche (12a, 40) des ersten magnetischen Elements (12, 32) im Wesentlichen mit der Außenfläche (4a, 42) des Greifers so fluchtet, um eingerichtet zu sein, eine magnetische Schnittstelle (14, 15) mit einer magnetischen Steuereinheit (24) außerhalb des Greifers auszubilden.

12. Greifer nach einem der Ansprüche 8 bis 11, bei dem die mobile Klemmbacke (8, 28a) für eine Drehung um eine Achse (9, 38a) der Klemmbacke (8, 28a) montiert ist; wobei sich der Luftspalt (23, 37) in einem Abstand zu der Achse (9, 38a) in einer Ebene erstreckt, die parallel zu der Schwenkachse (9, 38a) ist.

13. Greifer nach einem der Ansprüche 8 bis 12, bei dem das erste magnetische Element (32) aus Weicheisen besteht und das zweite magnetische Element entweder aus Weicheisen (35) oder aus einem Permanentmagneten (35a) besteht.

14. Greifer nach einem der Ansprüche 8 bis 13, bei dem das beständige Rückholmittel mindestens einen Permanentmagneten (39a, 39b) aufweist.

15. Greifer nach einem der Ansprüche 8 bis 14, mit einer zweiten beweglichen Klemmbacke (28b) und einem Versetzungssynchronisationsmittel (34) für die zwei Klemmbacken im Verhältnis zum Greifkörper (25).
